# EUROPÄISCHE PATENTSCHRIFT

(11) **EP 0 992 419 B1**
(45) Veröffentlichungstag und Bekanntmachung des Hinweises auf die Patenterteilung: **23.04.2003**
(21) Anmeldenummer: 99117445.9
(22) Anmeldetag: 08.09.1999
(51) Int. Cl.: B62D 21/15, B62D 25/10, B60R 21/34

(54) **Fahrzeug-Fronthaubenanordnung**
Front car bonnet assembly
Ensemble de capot avant de véhicule

(30) Priorität: 09.10.1998 DE 19846645
(43) Veröffentlichungstag der Anmeldung: 12.04.2000
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE)

(56) Entgegenhaltungen:
- DE-A- 19 710 417
- PATENT ABSTRACTS OF JAPAN vol. 1998, no. 10, 31. August 1998 (1998-08-31) & JP 10 138325 A (PLACO CO LTD), 26. Mai 1998 (1998-05-26)

## Beschreibung

Die Erfindung betrifft eine Fronthaubenanordnung gemäß dem Oberbegriff des Patentanspruchs 1. Eine derartige Fronthaubenanordnung ist aus der DE 197 10 417 A bekannt.

Die Optimierung von Fronthaubenanordnungen für Kraftfahrzeuge unter dem Gesichtspunkt der Verringerung zumindest der Intensität von Verletzungen bei Unfällen steht unter zwei Gesichtspunkten, die zum Teil einander widersprechende Maßnahmen erfordern: Was den Schutz der Fahrzeuginsassen bei einem Frontalaufprall anbelangt, muß verhindert werden, daß die Fronthaube durch die Windschutzscheibenöffnung in der Karosserie in den Fahrzeuginnenraum gedrückt wird. Das bedeutet, daß die Fronthaube scharnierseitig fest angelenkt sein muß, so daß sie sich weder nach hinten noch nach oben bewegt. Die Fronthaube selbst wird zweckmäßigerweise so gestaltet, daß durch Zusammenstauchen der Fronthaube in Längsrichtung und damit durch definierte Deformation derselben eine gezielte Energieumsetzung erfolgt. Hier ist es zweckmäßig, für einen engen Verbund zwischen Haube und Karosserievorderteil zu sorgen, so daß beide zusammen einen in Längsrichtung gezielt deformierbaren, weitgehend geschlossenen Hohlträger bilden. Die Deformation soll dabei, um dies zu wiederholen, gezielt erfolgen, damit nicht zu große Kräfte auf die schwenkbare Anlenkung (Scharnier) der Fronthaube ausgeübt werden. Zu diesem Zweck ist es bekannt, die Fronthaube mit querverlaufenden Sollknickstellen insbesondere in ihrem mittleren Längenbereich zu versehen. Betrachtet man demgegenüber die Haubengestaltung unter dem Gesichtspunkt des Fußgängerschutzes, so ist eine Anstellung der Haube in ihrem mittleren Längenbereich, wie sie durch Sollknickstellen der beschriebenen Art gerade hervorgerufen werden soll, zu vermeiden, da hierdurch scharfkantige Aufprallstellen insbesondere für den Kopf eines Kindes oder allgemein einer kleinen Person entstehen. Eine sehr flach oberhalb der Aggregate im Vorderwagen verlaufende Fronthaube ist jedoch auch nachteilig, da dann kaum Deformationsraum zwischen Fronthaube und Aggregaten (allgemein: harten Teilen) zur Verfügung steht, die Fronthaube aber zumindest örtlich beim Aufprall eines Kopfes nachgeben muß. Eine sich über die gesamte Haubenlänge erstreckende kraftübertragende Abstützung der Fronthaube am eigentlichen Vorderwagen (wodurch letztlich ein Verbund mit diesem entstehen würde) kann sich ebenfalls als nachteilig erweisen, weil hierunter die örtliche Deformierbarkeit der Fronthaube beim Kopfaufprall leiden würde. Zur Gewinnung eines großen Deformationswegs zwischen Fronthaube und Aggregaten oder dergleichen könnte man daran denken, die Haube sehr gewölbt auszuführen bzw. die Seitenwände des Frontwagens hoch auszuführen. Dies wiederum ginge aber auf Kosten des optischen Gesamteindrucks und des Strömungswiderstands des Fahrzeugs bei hohen Geschwindigkeiten.

Beim Fußgängeraufprall wiederum müssen unterschiedliche Auslegungen für Kinds- und Erwachsenenaufprall getroffen werden.

Der Erfindung liegt die Aufgabe zugrunde, eine gattungsgemäße Fronthaubenanordnung zu schaffen, die insbesondere den Gesichtspunkten des Fußgängerschutzes Rechnung trägt, ohne daß Zugeständnisse hinsichtlich des Insassenschutzes bei einem Frontalaufprall gemacht werden müssen.

Die erfindungsgemäße Lösung dieser Aufgabe besteht bei einer gattungsgemäßen Fronthaubenanordnung in den kennzeichnenden Merkmalen des Hauptanspruchs, vorteilhafte Ausgestaltungen der Erfindung beschreiben die Unteransprüche.

Die im Hauptanspruch angegebenen Maßnahmen zielen also darauf ab, beim Aufprall eines Fußgängerkopfes, insbesondere des Kopfes eines Kindes, eine individuelle örtliche Verformbarkeit ("Verbeulbarkeit") des mittleren Bereichs der Fronthaube sicherzustellen. Diese Maßnahmen gehen deshalb nicht auf Kosten der Sicherheit der Fahrzeuginsassen bei einem Frontalaufprall, weil, wie insbesondere Anspruch 5 zum Ausdruck bringt, zum Schutz der Fahrzeuginsassen Maßnahmen getroffen werden können, die erst bei den dann auftretenden Energien eine gezielte, also nicht individuelle Verformung der Fronthaube sicherstellen.

Von besonderem Interesse ist die in den Ansprüchen 8 und 9 angegebene Ausführungsform der Erfindung mit einer Höhenverstellung des hinteren Endbereichs der Fronthaube, und zwar nur bei einem Fußgängeraufprall. Wie einleitend bemerkt, ist es für den Fußgängerschutz wichtig, daß zwischen der Fronthaubenunterseite einerseits und harten Teilen im Vorderwagen, z. B. dem Antriebsaggregat des Fahrzeugs, andererseits ein die beschriebene Verbeulung beim Kopfaufprall ermöglichender Deformationsweg zur Verfügung steht. Die Maßnahmen nach den Ansprüchen 8 und 9 stellen nun sicher, daß bei einem Fußgängeraufprall - und nur dann - selbsttätig dieser Deformationsweg hergestellt wird, indem der hintere Endbereich der Fronthaube angehoben wird. Da diese Maßnahme erst und nur bei einem Fußgängeraufprall einsetzt, geht sie nicht auf Kosten des üblichen optischen Eindrucks des Fahrzeugs und seines Luftwiderstands.

Der zur Ansteuerung bzw. Aktivierung dieser Höhenverstellung vorgesehene Sensor muß also so ausgelegt sein, daß er nur in einem scharf begrenzten Bereich der Aufprallenergie oder Aufprallintensität, wie er bei einem Fußgängeraufprall vorliegt, die Höhenverstellung aktiviert, nicht aber bei einem Frontalaufprall des Fahrzeugs auf ein starres Hindernis, wie eine Mauer oder ein anderes Fahrzeug. In diesem Fall ist man gerade daran interessiert, die Haube möglichst fest an den eigentlichen Vorderwagen anzubinden und ein Abheben derselben zu verhindern.

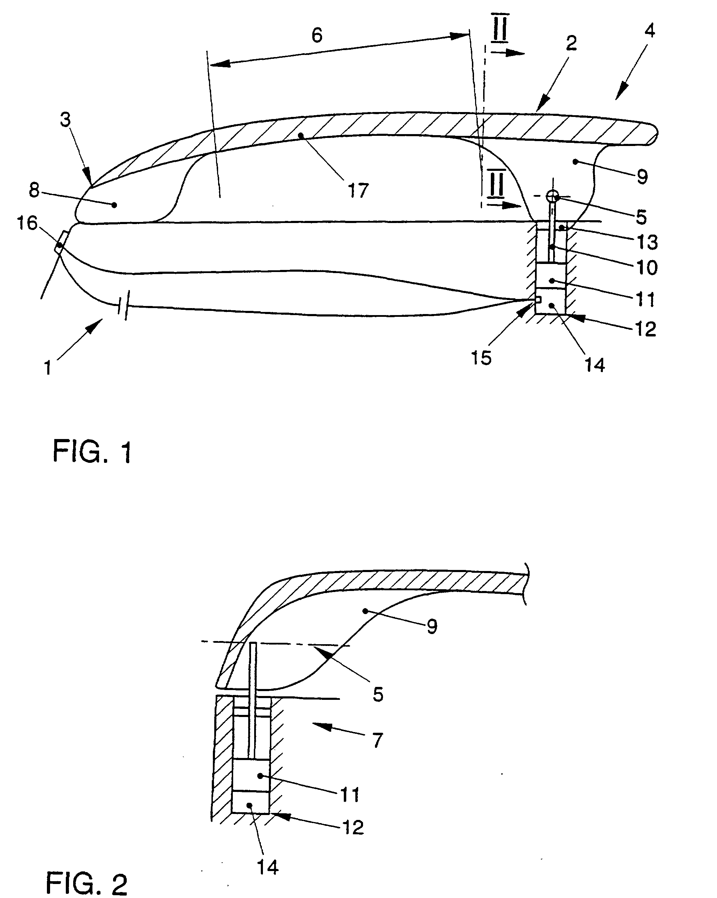

Ein Ausführungsbeispiel der Erfindung wird im folgenden anhand der Zeichnung erläutert, deren Figur 1 einen Längsschnitt durch den hier interessierenden Teil eines Vorderwagens eines Kraftfahrzeugs und deren Figur 2 die in Figur 1 mit II -II bezeichnete Schnittansicht wiedergibt.

Die den eigentlichen Vorderwagenbereich 1, in dem sich beispielsweise ein Antriebsaggregat befindet, abdeckende Fronthaube ist mit 2 bezeichnet. Zwischen ihrem vorderen Endbereich 3, der mit einem üblichen Fronthaubenschloß versehen ist, und ihrem hinten Endbereich 4, der um die Querachse 5 schwenkbar an dem eigentlichen Vorderwagen 1 gelagert ist, ist der mittlere Bereich 6 markiert, der den Aufprallbereich eines kindlichen Fußgängerkopfes enthält. Der Kopf eines Erwachsenen wird dagegen im wesentlichen im hinteren Endbereich 4 auftreffen, der auch zur Abdeckung von harten Teilen im Bereich der Windschutzscheibe, insbesondere von Scheibenwischerachsen, dient.

Um zumindest die Intensität von Kopfverletzungen bei kindlichen Fußgängern zu minimieren, muß der mittlere Haubenbereich 6 "verbeulbar" gestaltet sein, d.h. individuell deformierbar. Es geht hierbei also nicht um eine gezielte, konstruktiv vorgegebene Deformation des Fronthaubenbereichs 6, wie sie für den Frontalcrash vorgesehen ist. Um diese Verbeulbarkeit zumindest zu unterstützen, liegt die Fronthaube 2 zwar mit ihrem Rand allseits auf einer nach oben weisenden umlaufenden Karosseriekante des Vorderwagens 1 auf, stützt sich aber lediglich an vier Stellen kraftübertragend am Vorderwagen, insbesondere am Radkasten 7 (Figur 2) ab. Auf jeder Fahrzeugseite, bezogen auf die Fahrzeuglängsmittelebene, sind zwei derartige Abstützungen vorgesehen, von denen in den Figuren nur die auf der rechten Fahrzeugseite liegenden Abstützungen 8 und 9 erkennbar sind. Diese Abstützungen können in sich wieder deformierbar ausgeführt sein; sie sind aber steifer als der mittlere Haubenbereich 6. Die vorderen Abstützungen 8 können zu einem Oberschenkelschutz zusammengefaßt sein.

In den Figuren ist eine relativ stark gewölbte Haube angenommen. Genügt dennoch die Höhenlage der Fronthaube 2 nicht den Ansprüchen an den senkrechten Deformationsweg zwischen Haube und Aggregaten oder anderen harten Teilen, kann eine Höhenverstelleinrichtung für den hinteren Endbereich 4 der Haube 2 vorgesehen sein. Wie aus beiden Figuren ersichtlich, stützt sich die querverlaufende Schwenkachse 5 über die Kolbenstange 10 an dem Kolben 11 ab, die in dem karosseriefest gehaltenen Zylinder 12 mittels des Gleitlagers 13 an Bewegungen in Längsrichtung des Fahrzeugs gehindert ist. Der Zylinder 12 bildet unterhalb des Kolbens 11 die pyrotechnische Reaktionskammer 14, der der Zünder 15 zugeordnet ist. Der frontseitig des Fahrzeugs angeordnete Kollisionssensor 16 ist so ausgelegt, daß er nur dann Aktivierungssignale an die Zündvorrichtung 15 liefert, wenn ein Fußgängeraufprall vorliegt, nicht aber dann, wenn ein üblicher Frontalaufprall stattfindet. Das bedeutet, daß nur bei einem Fußgängeraufprall die Fronthaube 2 um ihren vorderen Endbereich 3, insbesondere um das dort angeordnete Schloß, hochgeschwenkt und dadurch ein Deformationsweg geschaffen wird.

Während also die Konstruktion der Fronthaube 2 bezüglich eines Kopfaufpralls so getroffen ist, daß dieser durch individuelle Verbeulung des mittleren Fronthaubenbereichs 6 gemildert wird, dient zur Einleitung einer gezielten Deformation der Fronthaube 2 bei einem Frontalaufprall die querverlaufende Sollknickstelle 17 solcher Anordnung und Ausbildung, daß bei einem Frontalaufprall der mittlere Haubenbereich 2 nach oben ausknickt. Jetzt ist die Bildung einer scharfen Kante im Kopfaufprallbereich nicht mehr kritisch, da ein Kopfaufprall nicht stattfindet, stattdessen in Längsrichtung eine möglichst umfangreiche Umsetzung von kinetischer Energie in Verformungsarbeit stattfinden muß.

Wie auch aus dieser Beschreibung folgt, bietet die Erfindung die vorteilhafte Möglichkeit der Auslegung verschiedener Bereiche der Haubenanordnung für unterschiedliche Unfallarten (Frontalcrash, Erwchsene, Kinder, Körperteile). Sieht man für die Haube 2 eine Sandwichkonstruktion gemäß Anspruch 11 vor, kann sie zugleich zur Schalldämmung herangezogen werden.

Mit der Erfindung ist demgemäß eine Fronthaubenanordnung geschaffen, die hinsichtlich der Verletzungsvermeidung bzw. Verringerung der Verletzungsintensität sowohl bei Unfällen mit Fußgängern als auch bei üblichen Aufprallunfällen optimiert ist.

## Patentansprüche

1. Fronthaubenanordnung für eine Öffnung in einer Fahrzeugkarosserie mit einer auf einem Karosserierand aufliegenden Haube, die in einem hinteren Haubenendbereich um eine Querachse schwenkbar karosserieseitig angelenkt ist, **dadurch gekennzeichnet, daß** die Haube (2) im wesentlichen nur an dem hinteren und einem vorderen Haubenendbereich (4, 3), zwischen denen sich eine den Kopfaufprallbereich eines kindlichen Fußgängers enthaltender mittlerer Haubenbereich (6) erstreckt, an starren Karosserieteilen, wie Radkästen, kraftübertragend abgestützt (8, 9) und der mittlere Haubenbereich (6) bei einem Kopfaufprall örtlich individuell deformierbar ist.

2. Fronthaubenanordnung nach Anspruch 1, **dadurch gekennzeichnet, daß** hintere Abstützungen (9) in senkrechten Richtungen bei einem Kopfaufprall deformierbar ausgeführt sind.

3. Fronthaubenanordnung nach Anspruch 2, **dadurch gekennzeichnet, daß** die hinteren Abstützungen (9) bei einem Kopfaufprall eines erwachsenen Fußgängers deformierbar ausgelegt sind.

4. Fronthaubenanordnung nach Anspruch 2 oder 3, **gekennzeichnet durch** eine vordere Abstützung (8), die zugleich einen Oberschenkelschutz für Fußgänger bildet.

5. Fronthaubenanordnung nach einem der Ansprüche 1 bis 4, **dadurch gekennzeichnet, daß** im mittleren Haubenbereich (6) zumindest eine querverlaufende Knickestelle (17) solcher Auslegung vorgesehen ist, daß sie einem Fußgängeraufprall widersteht.

6. Fronthaubenanordnung nach einem der Ansprüche 1 bis 5, **gekennzeichnet durch** je zwei den Haubenendbereichen (3,4) zugeordnete örtliche Abstützungen (8, 9).

7. Fronthaubenanordnung nach Anspuch 6, **dadurch gekennzeichnet, daß** die Abstützungen (8, 9) paarweise symmetrisch zur Längsmittelebene des Fahrzeugs angeordnet sind.

8. Fronthaubenanordnung nach einem der Ansprüche 1 bis 7, **dadurch gekennzeichnet, daß** der Querachse (5) eine Höhenverstellung (10 bis 15) zugeordnet ist, die über einen Sensor (16) nur bei einem Fußgängeraufprall aktivierbar ist.

9. Fronthaubenanordnung nach Anspruch 8, **gekennzeichnet durch** eine pyrotechnische Höhenverstellung (10 bis 15).

10. Fronthaubenanordnung nach einem der Ansprüche 1 bis 9, **dadurch gekennzeichnet, daß** Haube (2) und Abstützungen (8, 9) aus Materialien mit unterschiedlichen Kraft-Weg-Kennungen bei Deformation bestehen.

11. Fronthaubenanordnung nach Anspuch 10, **dadurch gekennzeichnet, daß** die Haube (2) sandwichartig mit einer schallschluckenden, energieabsorbierenden Mittelschicht und einer gelochten Unterschicht aufgebaut ist.

## Claims

1. Front-bonnet arrangement for an opening in a vehicle body, having a bonnet which rests on an edge of the body and is coupled in a rear end region to the body in a manner such that it can pivot about a transverse axis, **characterized in that** the bonnet (2) is supported (8, 9) in a force-transmitting manner on rigid body parts, such as wheel arches, essentially only at the rear and one front end region (4, 3), between which a central hood region (6) containing the head impact region for a child-like pedestrian extends, and the central bonnet region (6) can be deformed in a locally individual manner in the event of a head impact.

2. Front-bonnet arrangement according to Claim 1, **characterized in that** rear supports (9) are designed such that they can be deformed in vertical directions in the event of a head impact.

3. Front-bonnet arrangement according to Claim 2, **characterized in that** the rear supports (9) are configured such that they can be deformed in the event of a head impact of an adult pedestrian.

4. Front-bonnet arrangement according to Claim 2 or 3, **characterized by** a front support (8) which at the same time forms a thigh guard for pedestrians.

5. Front-bonnet arrangement according to one of Claims 1 to 4, **characterized in that** in the central bonnet region (6) there is provided at least one transversely extending buckling point (17) of such a configuration that it withstands a pedestrian impact.

6. Front-bonnet arrangement according to one of Claims 1 to 5, **characterized by** in each case two local supports (8, 9) which are assigned to the end regions (3, 4) of the bonnet.

7. Front-bonnet arrangement according to Claim 6, **characterized in that** the supports (8, 9) are arranged in pairs symmetrically to the longitudinal central plane of the vehicle.

8. Front-bonnet arrangement according to one of Claims 1 to 7, **characterized in that** a vertical-adjusting means (10 to 15) which can be activated via a sensor (16) only in the event of a pedestrian impact is assigned to the transverse axis (5).

9. Front-bonnet arrangement according to Claim 8, **characterized by** a pyrotechnic vertical-adjusting means (10 to 15).

10. Front-bonnet arrangement according to one of Claims 1 to 9, **characterized in that** the bonnet (2) and supports (8, 9) consist of materials having different force-travel characteristics during deformation.

11. Front-bonnet arrangement according to Claim 10, **characterized in that** the bonnet (2) is of sandwich-like construction with a sound-absorbing, energy-absorbing central layer and a perforated lower layer.

## Revendications

1. Ensemble de capot avant pour une ouverture dans une carrosserie de véhicule avec un capot placé sur un bord de carrosserie, qui est articulé du côté de la carrosserie de manière à pouvoir pivoter autour d'un axe transversal dans une portion d'extrémité de capot arrière, **caractérisé en ce que** le capot (2) est supporté (8, 9) de manière à transmettre les forces, essentiellement seulement au niveau de la portion d'extrémité de capot arrière et d'une portion d'extrémité de capot avant (4, 3), entre lesquelles s'étend une portion de capot centrale (6) contenant la partie de collision avec la tête d'un enfant à pied, sur des parties de carrosserie rigides, telles que des carters de roue, et la portion de capot centrale (6) peut être déformée individuellement localement en cas de collision avec la tête.

2. Ensemble de capot avant selon la revendication 1, **caractérisé en ce que** des appuis arrière (9) dans des directions verticales sont réalisés de manière à pouvoir se déformer dans le cas d'une collision avec la tête.

3. Ensemble de capot avant selon la revendication 2, **caractérisé en ce que** les appuis arrière (9) sont conçus de manière à pouvoir se déformer en cas de collision avec la tête d'un adulte à pied.

4. Ensemble de capot avant selon la revendication 2 ou 3, **caractérisé par** un appui avant (8) qui forme également une protection de la cuisse pour des piétons.

5. Ensemble de capot avant selon l'une quelconque des revendications 1 à 4, **caractérisé en ce qu'**au moins un point d'inflexion (17) s'étendant transversalement est prévu dans la portion de capot centrale (6), d'une conception telle qu'il résiste à une collision avec des piétons.

6. Ensemble de capot avant selon l'une quelconque des revendications 1 à 5, **caractérisé par** deux appuis (8, 9) locaux associés à chaque fois aux portions d'extrémité de capot (3, 4).

7. Ensemble de capot avant selon la revendication 6, **caractérisé en ce que** les appuis (8, 9) sont disposés par paire symétriquement au plan médian longitudinal du véhicule.

8. Ensemble de capot avant selon l'une quelconque des revendications 1 à 7, **caractérisé en ce qu'**un réglage en hauteur (10 à 15) est associé à l'axe transversal (5), et peut être activé par le biais d'un capteur (16) seulement dans le cas d'une collision avec un piéton.

9. Ensemble de capot avant selon la revendication 8, **caractérisé par** un réglage en hauteur pyrotechnique (10 à 15).

10. Ensemble de capot avant selon l'une quelconque des revendications 1 à 9, **caractérisé en ce que** le capot (2) et les appuis (8, 9) se composent de matériaux ayant des caractéristiques force-déplacement différentes en cas de déformation.

11. Ensemble de capot avant selon la revendication 10, **caractérisé en ce que** le capot (2) est construit en forme de sandwich avec une couche intermédiaire absorbant le son, absorbant l'énergie, et une couche inférieure perforée.
